(19) Europäisches Patentamt
European Patent Office
Office européen des brevets

(11) Publication number: 0 486 044 A2

# (12) EUROPEAN PATENT APPLICATION

(21) Application number: 91119517.0

(22) Date of filing: 15.11.91

(30) Priority: 16.11.90 US 614652

(43) Date of publication of application:
20.05.92 Bulletin 92/21

(84) Designated Contracting States:
BE DE ES FR GB IT NL SE

(51) Int. Cl.5: C08L 63/00

(71) Applicant: HERCULES INCORPORATED
Hercules Plaza
Wilmington Delaware 19894-0001(US)

(72) Inventor: Chan, Anita Ngai
421 Brian Creek Drive
Hockessin, Delaware 19707(US)
Inventor: Thompson, Samuel Anthony
113 Glenside Avenue
Wilmington, Delaware 19803(US)
Inventor: White, Mary Ann
955 S. Shirecliff Road
Salt Lake City, Utah 84108-1446(US)

(74) Representative: Lederer, Franz, Dr. et al
Lederer, Keller & Riederer, Patentanwälte,
Lucile-Grahn-Strasse 22
W-8000 München 80(DE)

## (54) Damage tolerant composites containing infusible particles.

(57) Damage tolerant structural composites comprising high strength filaments in the form of bundles or tows of continuous fiber and a crosslinked epoxy resin matrix are disclosed. The invention, more particularly relates to improvements in the crosslinked epoxy resin matrix which provide the structural composites with high post impact compressive strength while maintaining such other desirable attributes of epoxy composites as good high temperature performance, solvent resistance and good processing characteristics. The crosslinked epoxy resin matrix contains infusible particles that reside primarily between plies of the composite and have a median particle size between 5 - 75 microns. Prepregs for making the damage tolerant composites and methods of making such prepregs and the epoxy resin compositions thereof are also disclosed. The epoxy resin compositions contain the infusible particles which become segregated as to size on a surface layer of the prepreg during the process of combining the high strength filaments of the prepreg and the resin containing the epoxy resin composition. Alternatively, the infusible particles may be disposed directly on the epoxy resin surface of the prepreg.

EP 0 486 044 A2

This invention relates to damage tolerant structural composites comprising high strength filaments in a cross-linked epoxy resin matrix. This invention, more particularly, relates to improvements in the crosslinked epoxy resin matrix (and methods of achieving such improvements) which provide the structural composites with high post impact compressive strength while maintaining such other desirable attributes of epoxy composites as good high temperature performance and processing characteristics.

Composites comprising high strength filaments in a resin matrix are well known materials; they are being proposed for use in more and more weight sensitive applications such as aircraft structural components. Recently, there has been keen interest in increasing the "damage tolerance" of these composites. A criterion used for quantifying the "damage tolerance" is the measured compressive strength exhibited by the composite, laid-up in certain fashion, after it has received an impact typically in the range of 1,500 inch - pounds per inch thickness of the composite, such criterion referred to herein as post impact compression or post impact compressive strength (both abbreviated as PIC) or residual compressive strength after impact (abbreviated as CAI).

Epoxy resin compositions are thermosetting and may be processed into prepregs at low temperatures, unlike thermoplastics. In addition, composites made using epoxy resin compositions traditionally have exhibited good high temperature properties. However, the damage tolerance of composites having a crosslinked epoxy resin matrix has been generally much less than that of the thermoplastic materials.

One approach proposed for increasing the damage tolerance of composites made from epoxy resin compositions has focused on increasing the toughness of the cured epoxy resin composition used as the matrix material in the composites. Inclusion of polyarylsulfones to lower crosslink density has been suggested for this purpose. (See, for example, US Patents 4,608,404, 4,656,207 and 4,656,208.) Further improvements in damage tolerance have been shown to be achieved by the inclusion of infusible rubber particles greater than ten microns in size in the matrix resin (U.S. Patents 4,783,506 and 4,863,787). However, the examples in these patents are of particles that are formed in situ during the formulation of the resin in a complex process involving the use of solvent and involving techniques that are dependent on a number of factors. U.S. Application Serial. No. 07/286,840, filed 12/20/88, disclosed that ground rubber particles or inorganic particles such as glass or ceramic could be added to the epoxy resin composition as already formed particles (referred to herein as ex situ) to obtain similar improvements to damage tolerance without the complex processing requirements of the in situ process. However, neither the ex situ particles described in that application nor any others previously known provide compression after impact strengths comparable to the levels found with in-situ particles in the 4,783,506 and 4,863,787 patents. In addition, the examples in the above patents and patent applications are primarily of epoxy resin compositions that include an aromatic oligomer that results in a composite that exhibits phase separation when examined by the photomicroscopy techniques described in all of the above references. In the present invention, the advantageous properties are obtained regardless of the presence of visible phase separation.

European Patent Application Publications 0351 025, 0351 026, 0351 027, and 0351 028 describe the use of high Tg rubber particles, (Tg above 15° C) that will not melt or significantly soften during composite fabrication, including thermoplastic and thermoset resin particles as well as carboxylated rubber particles, for the purpose of increasing damage tolerance.

Although progress has been achieved in increasing the damage tolerance of epoxy resin composites made using conventional processing temperatures and techniques, improvements in damage tolerant composites with good high temperature performance damage and processing characteristics are still desired.

It is an object of this invention to provide improvements in the damage tolerance of composites comprising high strength filaments in a crosslinked epoxy resin matrix, such composites also having good high temperature performance and processing characteristics.

It is an object of this invention to provide an epoxy resin composition which may be used in making damage tolerant composites.

These and other objects have been accomplished in practice of this invention which is described in the following disclosure.

The resin compositions of this invention that are used in the preparation of damage tolerant composites comprise from about 70 to about 99 wt% of an epoxy resin composition and from about 1 to about 30 wt% of ex situ particles, wherein the particles have a median size between 5 and 75 microns the improvement wherein said particles are selected from the group consisting of elastomeric particles having a Tg below about 15° C and mixtures of said elastomeric particles and inorganic particles.

This invention relates to the discovery that composites comprising high strength filaments and a tough crosslinked epoxy resin matrix are made exceptionally damage tolerant when infusible particles having a median particle size in excess of five microns are incorporated as part of the epoxy resin composition used

in forming the composite. The infusible particles are preformed (also referred to as "ex situ") rather than formed in situ during resin manufacture and are either rubber, inorganic or a mixture of rubber and inorganic particles. The particles preferably have been treated to enhance the adhesion between the particles and the matrix. It has been found that rubber particles having low glass transition temperatures (between -40 and +15°C) are particularly useful in the practice of the invention, although some rubber particles with higher Tg's were also useful in the practice of the invention. In addition, it was found that the best improvement in damage tolerance was achieved in some of the resin systems described herein when a combination of inorganic and organic particles was used.

Depending on the particular ingredients included in the resin composition, the matrix resin may be either phase separated or substantially single phase (homogeneous). A distinct advantage of using these particles over the in-situ created particles described in U.S. Patents 4,783,506 and 4,863,787 is that solvent processing is no longer required. Freedom from solvent processing allows greater batch size production and shorter process cycle time. Alleviation of the process control problems associated with solvent use in preparing in-situ particles will reduce loss of material due to inability to meet material specifications. Overall costs of resins containing ex-situ particles described herein will be significantly reduced.

The epoxy resin compositions used in making the damage tolerant composites comprise one or more epoxy resins; optionally a reactive aromatic oligomer component or a thermoplastic polymer component or a mixture thereof; a curing agent and infusible particles. A cure accelerator may also be present. The epoxy resin composition may be in the form of a film for impregnating bands of high strength filaments, a mass of material that can be rendered molten by heat and spread on bands of high strength filaments or a dissolution product that can impregnate high strength filaments in dipping operations.

The epoxy resins contain on average more than one epoxide group per molecule and preferably at least 2 epoxide groups per molecule. The term epoxide group as used herein refers to the simplest epoxide group which is the three-membered ring,

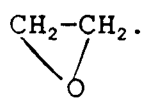

The terms of epoxy (or epoxide), 1,2-epoxy (or epoxide), vicinal epoxy (or epoxide) and oxirane group are also art recognized terms for this epoxide group.

Epoxy resins having between 2 and about 4 epoxide groups per molecule are particularly preferred. Suitable aromatic epoxy resins are resorcinol diglycidyl ether; diglycidyl ether of bisphenol A (or 2,2-bis[p-(2,3-epoxy-propoxy)phenyl]-propane), for example DER 332 from Dow Chemical Company; triglycidyl p-aminophenol (or 4-(2,3-epoxypropoxy)-N,N-bis(2,3-epoxy-propyl)aniline), for example MY0510 from Ciba-Geigy; diglycidyl ether of bromobisphenol A (or 2,2-bis[4-(2,3-epoxypropoxy)3-bromo-phenyl]propane; diglycidylether of bisphenol F (or 2,2-bis[p-(2,3-epoxy-propoxy)phenyl]methane), for example LY9703 from Ciba-Geigy; triglycidyl ether of meta-amino-phenol (or 3-(2,3-epoxypropoxy) N,N-bis(2,3-epoxypropyl)-aniline); tetraglycidyl methylene dianiline (or N,N,N'-tetra-tetra(2,3-epoxypropyl) 4,4'-diamino-diphenyl methane), for example, MY 721 from Ciba-Geigy; polyglycidyl ethers of phenol-formaldehyde novalac (e.g. DEN 431 or 438 of Dow Chemical Company); polyglycidyl ether of orthocresol-novalac (available from Ciba-Geigy as, for example, ECN 1235 or 1273); polyglycidyl ethers of polymeric novalacs, for example SU-3 or or SU-4 from Hi-Tek; triglycidylether of tris(4-hydroxyphenyl) methane (Tactix 742 from Dow Chemical Company); tetraglycidyl ether of tetra(4-hydroxy phenyl)ethane, e.g. MT0163 from Ciba-Geigy or 1031 from Shell Oil Company; cycloaliphatic epoxides and epoxide esters (e.g., CY 179 from Ciba-Geigy Corporation); the diglycidyl ether of 9,9'-bis(4-hydroxyphenyl)fluorene, for example Epon HPT Resin 1079 from Shell Chemical Company; N,N,N',N'-tetraglycidyl-$\alpha,\alpha'$-bis(4-aminophenyl)-p-diisopropyl benzene, for example Epon HPT Resin 1071 from Shell Chemical Co.; and N,N,N',N'-tetraglycidyl-$\alpha,\alpha'$-bis(4-amino-3,5-dimethylphenyl)-p-diisopropylbenzene, for example Epon HPT Resin 1072 from Shell Chemical Company. Combinations of two or more epoxy resins can be used as the epoxy resin component. Combinations include mixtures of diepoxides comprising diglycidyl ether of bisphenol F, diglycidyl ether of bisphenol A, and the triglycidylaminophenols; or tetraglycidyl methylene dianiline, diglycidyl ether of bisphenol A, and a cycloaliphatic epoxide ester. Particular preferred combinations are found in the examples herein.

The curing agent of the preferred epoxy resin compositions is preferably an amine hardener, more preferably an aromatic diamine having a molecular weight below 750 and still more preferably is a compound of the formula

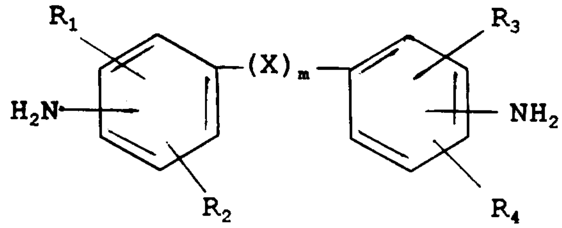

where $R_1$, $R_2$, $R_3$ and $R_4$ are independently hydrogen, halogen or an alkyl or alkoxy group with 1 to 12 carbon atoms and X is O, S, $SO_2$, alkylene, alkylidene, and oxoalkylene and m is 0 or 1, a phenylene diamine or a heterocyclic diamine. A particularly preferred aromatic diamine is 4,4'-diaminodiphenylsulfone. Other aromatic diamines include 3,3'-diaminodiphenylsulfone; a diaminodiphenyl sulfide; a methylenedianiline such as 4,4'-methylene-dianiline; a diaminodiphenylether; a diaminobenzophenone; benzidine; 4,4'-thiodianiline;-4-methoxy-6-m-phenylenediamine; 2,6-diaminopyridine; 2,4-toluenediamine; 4,4'-[1,4-phenylene(1-methylethylidene)]bis(benzeneamine) (e.g. Shell Company's Epon HPT curing agent 1001-M; 4,4'-[1,4-phenylene(1-methylethylidene]bis(2,6-dimethylbenzenamine), e.g. Shell's Epon HPT curing agent 1062-M; and dianisidine. Still other aromatic diamines such as the di(aminophenoxy)diphenyl ethers or sulfones can be employed if desired. Alicylic amines such as menthane diamine may also be employed. In some cases aliphatic amines such as secondary alkylamines which are normally fast reacting hardeners can be used alone or in combination with other amine hardeners provided the concentration and/or curing temperature are sufficiently low to permit control of the curing rate. Other fast reacting hardeners which can be employed as curing agents for making the epoxy resins of the invention are dicyandiamide, boron trifluoride/amine complexes, imidazoles, polyamides, o-tolylbiguanide, and the like. Such catalytic hardeners may be used conjunction with an amine.

The amine hardener is present in the composition in an amount sufficient to crosslink or cure the composition and preferably is present in an amount which provides from 0.3 to 1.5 equivalents and more preferably from 0.5 to 1.2 equivalents of active hydrogen atoms per one equivalent of epoxide groups in the composition.

The curing agent may also be anhydrides and dianhydrides such as carboxylic acid anhydride, tetrahydrophthalic anhydride, methyl-tetrahydrophthalic anhydride, nadicmethylanhydride, phthalic anhydride, maleic anhydride, polyazilicpolyanhydride, trimellitic anhydride, benzophenone tetracarboxylic dianhydride and pyromellitic anhydride. The glycol adducts of these anhydrides may also be used as curatives.

In one embodiment of this invention there is present a reactive aromatic oligomer which contains functional groups which are reactive with the epoxy resin component and/or the amine hardener of the composition. In one preferred embodiment the oligomer is epoxy-reactive (i.e. reacts with epoxide groups) and has at least 1.4 epoxy-reactive groups per molecule. In another embodiment the oligomer is epoxy-functional, i.e. it contains epoxide groups. The reactive aromatic oligomer preferably contains divalent aromatic groups such as phenylene, diphenylene or naphthalene groups linked by the same or different divalent non-aromatic linking groups. Exemplary linking groups are oxy(-O-); sulfonyl ($-SO_2-$); divalent sulfur (-S-); oxyalkylene or oxyalkyleneoxy(-OR- or -ORO-) wherein R is lower alkylene preferably with 1-3 carbon atoms); lower alkylene or alkylidene (-R- or $-R(R_1)_y$ wherein R and $R_1$ are independently lower alkylene and y is 1 or 2); ester groups such as $-(R_1)_xCOO(R_2)_y-$ wherein $R_1$ and $R_2$ are independently lower alkylene preferably with 1 to 3 carbons and x and y are independently zero or 1; and oxaalkylene, i.e.,

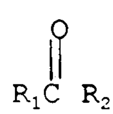

where $R_1$ and $R_2$ are independently lower alkylene or a valence bond. The aromatic units can be substituted with non-interfering substituents such as chlorine, lower alkyl, phenyl, etc. Generally, at least twenty-five percent of the total number of carbon atoms in the reactive aromatic oligomer will be in aromatic structures, and preferably at least about 50% of the total carbon atoms are in aromatic structures.

The reactive aromatic oligomers are preferably polyethers, polysulfones, polyethersulfones, polyether ketones, polyethersulfones, polythioethersulfones or polyimides and more preferably contain sulfone bridged diphenylene units or ketone bridged diphenylene units. Other types of units which can be present in these preferred oligomers are aromatic or cycloaliphatic units that are not bridged (e.g., naphthalene) or are bridged by groups which are essentially nonpolar, examples of which are alkylidenes such as isopropylidene bridges. Particularly preferred reactive oligomers contain sulfone bridged diphenylene units and bisphenol units, a portion of the latter units optionally being replaced by divalent sulfur (-S-) to provide a reactive oligomer of the formula:

$NH_2R''\text{-}O\text{-}(R\text{-}R')_m\text{-}(R\text{-}S)_n\text{-}R\text{-}O\text{-}R''NH_2$

wherein R'' is 3,4-phenylene or 4,4'-phenylene; R is the residuum of a dihalodiphenylsulfone such as 4,4'dichlorodiphenylsulfone or a dihalogendiphenyl ketone, R' is the residuum of a dihydroxy or dithiol aromatic compound such as bisphenol A, dihydroxy benzene biphenol and quinoline, O is divalent oxygen, S is divalent sulfur and m plus n averages between 8 and 25 and m is preferably at least 2. Reactive aromatic oligomers such as those disclosed in EPA 88.120096.8 which is hereby incorporated by reference, may also be employed. Such oligomers include oligomers which are the reaction product of p-bis-(4-isopropylidene-2,6-dimethylaniline)benzene and 3,3',4,4'-benzophenone-tetracarboxylic dianhydride; the reaction product of p-bis-(4-isopropylidene-2,6-dimethylaniline)-benzene and trimellitic anhydride acid chloride; the reaction product of p-bis-(4-isopropylidene-2,6-dimethylaniline)benzene and isophthaloyl dichloride; the reaction product of 1,3-diaminobenzene and isophthoyl dichloride and the reaction product of 3,3',4,4'-benzophenone-tetracarboxylic dianhydride and diethyldiaminotoluene. Other amine or carboxylic acid derivative terminated oligomers as contemplated by EPA 88.120096.8 may also be employed including amine or carboxylic acid terminated polyimides, polyamides, or polyamideimides.

The reactive aromatic oligomers preferably have reactive groups that are terminal groups on the oligomer backbone. The preferred reactive groups of the reactive aromatic oligomer are primary amine($-NH_2$), hydroxyl(-OH), carboxyl(-COOA where A is hydrogen or an alkali metal), anhydride, thiol, secondary amine and epoxide groups. Especially preferred are reactive aromatic oligomers having at least about 1.7 reactive groups per molecule and having at least about 70% of the total number of reactive groups present as primary amine, secondary amine, hydroxyl and/or epoxide groups.

The preferred reactive aromatic oligomers are made, for example, by reacting a molar excess of a sulfone such as dichlorodiphenylsulfone with a dihydroxy aromatic compound or compounds such as bisphenol A or 2,7-naphthalenediol so as to yield a chloro-terminated oligomer and then reacting this chloro-terminated oligomer with an alkali metal salt of a hydroxy amine compound such as para or meta aminophenol to provide the reactive groups on the ends of the oligomer. Suitable sulfones for this procedure are meta and para dichlorodiphenylsulfones. Among the suitable dihydroxy aromatic compounds for use in this procedure are bisphenol A, bisphenol F, naphthalenediols and biphenyl diols. More detailed procedural steps appear in U.S. Pat. 4,789,722 which is herein incorporated by reference. Other procedures for producing oligomers having reactive end groups are disclosed in U.S. Patents 3,895,064 and 3,563,951, the latter patent using a procedure which involves forming nitro terminated oligomers and then reducing the nitro groups to amines.

The glass transition temperature of the reactive aromatic oligomer preferably ranges between 150 and 250 °C. A more preferred range is between 160 and 220 °C. The molecular weight (number average) of the reactive aromatic oligomer preferably ranges between 2,000 and 10,000. Preferably, the reactive aromatic oligomer has a polydispersity ($M_w/M_n$) of between about 2.0 and 4.0 where $M_n$ is number average molecular weight and $M_w$ is weight average molecular weight.

In the embodiments of this invention that employ a thermoplastic component, such component may be any of a variety of commercially available thermoplastics. Engineering or performance grade thermoplastics are preferred. The thermoplastic component should be soluble in the epoxy resin component and will be present in a concentration dependent upon the thermoplastic selected and the particular end use envisioned. However, for most purposes the final formulation will contain from about 0 to 30% thermoplastic by weight of the thermoplastic component. Examples of suitable thermoplastics are polyarylates, polyimides, polyamides, polyetherimides (PEI), polyamideimides, polyarylethers, phenoxy resins, polyarylsulfones, polyethersulfones (PES), polyetherketones, polyphenylene ethers and polycarbonates (PC).

The epoxy resin compositions may additionally include an accelerator to increase the rate of cure. Any of the accelerators known and used in the epoxy resin art may be employed in conventional amounts, including Lewis acid:amine complexes such as $BF_3$:monoethylamine, $BF_3$:triethanolamine, $BF_3$:piperidine and $BF_3$:2-methylimidazole; amines such as imidazole, 1-methylimidazole, 2-methylimidazole, 2-ethyl,4-methylimidazole, N,N-dimethylbenzylamine, and other tertiaryamines; acid salts of tertiary amines such as the p-toluene sulfonic acid salts of imidazoles or morpholine; salicylic acid salts of imidazoles or benzyldimethylamine; dicyandiamide; 1,1-dimethyl-3-phenyl urea or other substituted ureas such as monuron, diuron, or phenuro; substituted imidazoles; trifluoromethanesulfonic acid salts; carbamides such as toluene-2,4-bis-(N,N-dimethyl carbamide); guanidines such as di-ortho-tolyl guanidine, diphenyl guanidine, tetramethylguanidine; hydroxyl-containing compounds such as bisphenols A,F, or S, catechol, dihydroxynaphthalene, hydroquinone, of tetrabromobisphenol A; and organophosphonium halides. The cure accelerators are typically used at a level of about 0 to 5% by weight of the formulation.

The epoxy resin compositions hereof further contain ex-situ infusible particles which can be elastomeric or comprised of inorganic materials. The infusible particles have a median particle size (i.e. half are bigger and half are smaller) ranging between 5 and 75 microns. The infusible particles may take a variety of shapes including cylindrical, spherical, elongated, platelet or irregular. The particles are infusible insofar as they resist deformation and dissolution during manufacture of the epoxy resin composition and prepregs thereof. Suitable elastomeric particles include a variety of commercially available rubbers such as copolymers of butadiene or isoprene with acrylonitrile or vinyl aromatic monomers such as styrene or vinyl toluene, or terpolymers of a diene, a vinyl aromatic monomer and acrylonitrile. Other suitable rubbers include natural rubber, silicone rubber, diene or olefin rubbers and acrylic rubbers. The rubber particles may be formed by cryogenic grinding of larger pieces of rubber to yield irregularly shaped particles in the desired range of particle sizes. The particles may also be formed by spray drying, coagulating, precipitation, or flash evaporation of solutions or suspensions of rubbers. The particles may be formed by dispersion or emulsion polymerization or any other method suitable for the formation of particles in this size range. These rubber solutions or suspensions may be formed in the presence of a reinforcing filler.

The rubber polymer preferably contains functionality which improves the adhesion between the particle and the epoxy matrix resin. For example, the rubber may contain carboxyl groups which either react so as to chemically bond with the matrix or simply improve compatibility of the particles with the resin due to their polar nature. Adhesion to the matrix can also be improved by swelling of the particles with the resin composition.

Carboxylated rubbers are well known commercially and methods for introducing carboxyl groups into rubber substrates are also well known. For example, carboxyl-containing monomers may be copolymerized with the other monomers during synthesis of the rubber. Additionally, carboxyl groups may be grafted onto a rubber after it has been formed. Core-shell rubber particles having carboxyl functionality may be prepared by grafting a rubber particle with a mixture of copolymerizable monomers including a carboxyl-containing monomer. Rubber particles having other functionalities such as primary and secondary aliphatic or aromatic amines, hydroxyl, phenol, epoxy, thiol, anhydride or any other group capable of interacting with the epoxy composition may also be employed. Carboxylated rubber particles having a glass transition temperature below 15°C are preferred. More preferably, the particles Tg is in the range from -35 to +15°C. However, particles with higher glass transition temperatures can also be employed with favorable results.

The particles employed in the experiments herein were butadiene-acrylonitrile copolymers which optionally contained another polymerizable comonomer. The particles were made by emulsion polymerization of a mixture of monomers in the presence of a reinforcing filler. The emulsion was spray dried to yield rubber particles with a median size between 5 and 75 microns. Hycar 1422, from B.F. Goodrich, is a butadiene-acrylonitrile copolymer particle having an average diameter of about 45 microns. It contains no carboxyl functionality. Proteus 5025, from B.F. Goodrich, is a carboxy functional acrylonitrile-butadiene-styrene copolymer with particles ranging from 6-78 microns in diameter. It has a Tg of +28°C. Nipol 5078 and developmental products designated 121-1, 197-44, and 197-93 from Zeon Chemicals U.S.A., Inc. are carboxy-functional acrylonitrile-butadiene copolymers with particles ranging in size from 6-70 microns. Nipol 5078 has a Tg of -26°C; 121-1 has a Tg of -20°C; 197-44 and 197-93 have a Tg of -15°C. Developmental product 197-92, from Zeon Chemicals U.S.A., Inc., is an acrylonitrile-butadiene copolymer having no carboxyl functionality and a Tg of -10°C. Its particles also range in size from 6-70 microns.

In other embodiments, the infusible particle comprises glass, ceramic or other inorganic particles which are not soluble and therefore do not crosslink in the epoxy matrix. 5 In these embodiments of this invention, glass beads or the like, or ceramic particles are dispersed in the epoxy resin composition during or after its formation and may be surface treated to enhance adhesion in the crosslinked epoxy resin matrix. In some embodiments of this invention a mixture of rubber particles and inorganic particles has been found to provide improved impact properties in composites over composites containing only rubber particles or inorganic particles.

Suitable inorganic fillers include ceramic and glass particles having a median particle size of 5-75 microns. The fillers are preferably spherical to minimize resin viscosity. They may be hollow or solid. Their composition may be soda lime glass, sodium borosilicate glass, alumino-silicate, fly ash, perlite, mica, ceramic, and the like. The inorganic filler is preferably coated with a coupling agent to improve compatibility or adhesion between the filler and the resin. Suitable coupling agents may be silanes, such as 3-(glycidoxy)propyltrimethoxysilane, 3-aminopropyltriethoxysilane; titanates; zirconates; or the like. These inorganic fillers are widely available commercially.

Table A below provides the general and preferred ranges, as parts by weight, for the epoxy resin component, reactive aromatic oligomer or thermoplastic, hardener and infusible particles present in the thermosetting epoxy resin compositions of this invention.

TABLE A

| | General | More Preferred |
|---|---|---|
| Epoxy Resin Component | 100 | 100 |
| Reactive Oligomer or Thermoplastic | 10 to 200 | 15 to 60 |
| Hardener (curing agent) | 15 to 100 | 20 to 60 |
| Infusible Particles[a] | 1 to 50 | 4 to 30[b] |

[a] E.g. carboxy functional rubber polymer and glass mixture.
[b] By weight, per hundred parts of the epoxy resin composition.

Other ingredients such as catalyst, antioxidant, processing aids and the like are included in the epoxy resin compositions in minor amounts.

The epoxy resin compositions are mixed using conventional procedures. Typically the epoxy resins are charged to a suitable container, heated to 80-150°C and preferably to 60-130°C (depending on the particular formulation) while stirring. If an aromatic oligomer or a thermoplastic polymer is used in the formulation, it is dispersed and the mixture can be stirred until the oligomer or polymer dissolves. Alternatively, the oligomer or polymer is in the form of a fine powder that will dissolve upon cure. The curing agent is dispersed at a suitable temperature depending on its composition followed optionally by cure accelerator. The infusible particles may be dispersed in the resin or reserved for application to the prepreg in some other way (for example, see below). If the particles are dispersed in the resin, they may be added to the formulation before or after the thermoplastic or oligomer is dissolved. Typically, the particles are dispersed before the curing agent is added, although they may be added later.

The epoxy resin composition is used to impregnate high strength filaments or fibers composed of carbon or graphite, glass, aromatic polyamides (such as Kevlar from DuPont), boron, and the like to make prepreg. Composites containing from about 30 to 70 percent and preferably from about 40 to 70 percent of these fibers based on the total volume of the composite are preferred in making composite structures.

This invention has particular applicability to damage tolerant composites which are made from materials commonly referred to as "prepregs." Prepregs comprise resin and high strength filaments which are previously in the form of filamentary bundles (often called "rovings" or "tows") comprising a multitude of the filaments before the manufacture of the prepreg which is typically in the form of a flat sheet. Each tow of carbon fiber, for example, typically bundles between about 500 and 20,000 filaments. A plurality of filamentary bundles are aligned or woven together in making a prepreg in sheet form, a preferred form according to this invention. Alternatively, the prepreg may be in the form of a single bundle of filaments impregnated with resin. This latter prepreg form finds use in processes such as filament winding and pultrusion.

The preferred high strength filaments are carbon or graphite fiber filaments made, for example, by carbonizing polyacrylonitrile, rayon or pitch. Examples of preferred high strength filaments are AS-4, IM-6 and IM-7 carbon fiber marketed by Hercules Incorporated.

The prepregs of this invention are made by combining the epoxy resin compositions and high strength filaments using conventional techniques. For example, the epoxy resin composition can be made into a film on a sheet of release paper in a film process. Film carried by upper and lower release papers are pressed into bands or sheets of high strength filaments in making prepreg by this process. Alternatively, a "hot bead" process may be used wherein the epoxy resin composition is rendered molten and pressed into the bands or sheets of high strength filaments. Still another route is by dissolving the epoxy resin composition

in a solvent, passing the high strength filaments through a bath containing the solvent and then driving off the solvent to provide the prepreg. In this latter technique, the bath is advantageously agitated to keep the infusible particles dispersed therein.

In all of the aforementioned techniques of making prepreg, the large infusible particles are trapped or filtered by the filament tows or bundles, thereby providing a prepreg that has these particles on its surface rather than between filaments in the bundle or tows of filaments. Alternative methods for affixing the infusible particles to the surface of the prepreg include sprinkling, spreading or spraying the dry particles onto the tacky surface of the prepreg. In another method, a film containing a portion of the matrix resin and the infusible particles is applied to the surface of a prepreg already impregnated with the remainder of the resin. The infusible particles dispersed in a portion of the matrix resin can also be coated onto the surface of a prepreg containing the remainder of the resin.

The prepregs are simply laid on one another and then cured in making the damage tolerant components of this invention. Other high strength filaments, preferably having a diameter between 3 and 9 microns, can also be employed.

Other methods of preparing prepreg known to those skilled in the art may also be followed in the practice of this invention.

A series of composite test panels are made from prepregs prepared following the foregoing procedures. The prepregs were layed up and cured and the cured composite panel tested to determine the post impact compression test values. The panels tested were 4 inches wide and 6 inches long. The panels were thirty two plies thick, each ply containing carbon fiber filaments extending in a single direction. The panels were quasi-isotropic according to the following scheme:

$(+45°/0°/-45°/90°)_{4s}$.

(The 4S in the lay-up means the lay-up had a total of thirty-two (32) plies layed up as follows: a set of four plies was layed-up at the recited angles four times (i.e. sixteen plies in all) starting each time with a +45° ply followed by laying a set of four plies four times in reverse order (i.e., sixteen plies in all) starting each time with a 90° ply. The lay-up was cured at 350°F for two to four hours or as specified in a particular Example. The cured panels were impacted with an impact energy of 1,500 inch - lbs/inch thickness while suspended over a 3 x 5 inch opening. The compressive strength of the impacted panels (CAI) was determined using the test procedure of NASA publication 1092, modified as above.

A number of epoxy resin compositions were made and various infusible particles mixed into the compositions. The epoxy resin compositions were then used to make prepregs containing carbon fiber in the form of a plurality of tows each comprising a multitude of filaments. The prepregs were laid up and cured in the manner described above.

The following Examples illustrate practice of this invention and are not intended as a limitation thereof. All parts and percentages in the Examples are parts and percentages by weight and all temperatures are in degrees celsius unless otherwise noted.

Table B identifies the composition of all the commercially available ingredients used in the formulations described in the Examples.

Table B

| Tradename or Abbreviation | Composition |
|---|---|
| MY 9512 and MY 721 | tetraglycidylmethylene dianiline from Ciba-Geigy |
| Epon 834 and Epon 828 | bisphenol A-based epoxies from Shell Chemical Company |
| CY 179 | cycloaliphatic epoxy ester from Ciba-Geigy |
| MY 0510 | triglycidyl-p-aminophenol from Ciba-Geigy |
| Tactix 742 | triglycidyl-tris-(4-hydroxyphenyl)methane from Dow Chemical Company |
| DER 332 | bisphenol A-based epoxy from Dow Chemical Co. |
| Epi-Rez SU-8 | polyglycidyl novalac from Hi-Tek Polymers |
| PY 306 and LY 9703 | bisphenol F-based epoxies from Ciba-Geigy |
| 4,4'-DDS | 4,4'-diaminodiphenyl sulfone |
| 3,3'-DDS | 3,3'-diaminodiphenyl sulfone |

Table B (Cont'd)

| Tradename or Abbreviation | Composition |
| --- | --- |
| DICY | dicyandiamide |
| $BF_3$ MEA | boron trifluoride monoethyl amine complex from Harshaw Chemical Company |
| Victrex 5003P | polyethersulfone thermoplastic from ICI Americas, Inc. |
| SS0042 | 325 mesh solid glass beads treated with 3-aminopropyltriethoxysilane from Petrarch Systems |
| SS0046 | 325 mesh solid glass beads treated with 3-(glycidoxy)propyltrimethoxy-silane, from Petrarch Systems |
| Hycar 1422 | polybutadiene-acrylonitrile rubber powder from B. F. Goodrich |
| Proteus 5025 | carboxy-functional polybutadiene-acrylonitrile-styrene rubber particles having a diameter in the range of 6-78 microns |
| Flex-o-fill 7B | Glass microspheres having an average diameter of 32 microns, treated with 3-aminopropyl-triethoxysilane, from Flex-o-lite |
| Nipol 5078 | carboxy-functional butadiene-acrylonitrile rubber particles having a Tg of -26°C, and a particle size range of 6-70 microns from Zeon Chemicals, USA, Inc. |
| 197-92 | butadiene-acrylonitrile rubber particles having a Tg of -10°C, and a particle size range of 6-70 microns from Zeon Chemicals USA, Inc. |
| 197-93 and 197-44 | carboxy-functional butadiene-acrylonitrile rubber particles having a Tg of -15°C, and a particle size range of 6-70 microns from Zeon Chemicals, USA, Inc. |

Table B (Cont'd)

| Tradename or Abbreviation | Composition |
|---|---|
| 121-1 | carboxy-functional butadiene-acrylonitrile rubber particles having a Tg of -20°C, and a particle size range of 6-70 microns from Zeon Chemicals, USA, Inc. |
| TPPEI | ethyltriphenylphosphonium iodide from Morton Thiokol |
| Agerite Resin D | polymerized 1,2-dihydro-2,2,4-trimethyl-quinoline antioxidant from R. T. Vanderbilt |

Example 1

The formulations in Table 1 set forth below were used in preparing prepreg made of an epoxy resin composition and tows of IM7G carbon fibers using procedures described hereinafter. The MY 9512 and 10 parts of the 4,4'DDS were combined and milled for about 25 minutes at 75°C. This mixture was combined with the Epon 834 at 95°C. The CY 179 and 28 parts of 4,4'-DDS were combined and heated at about 140°C for 2 hours, cooled and then added to the other ingredients. The ex situ particles were dispersed. The DICY and Epon 828 had been combined and allowed to stand for about a week at 50°C. This DICY/Epon 828 mixture was then added to the rest of the formulation of 1A below after it had cooled to below 75°C. $BF_3$MEA was added to formulation 1B after it had cooled to below 75°C.

TABLE 1

| Ingredient | 1A | 1B |
|---|---|---|
| Epon 834 | 80 | 80 |
| MY 9512 | 20 | 20 |
| CY 179 | 19 | 19 |
| EPON 828 | 3 | 3 |
| 4,4' DDS | 38 | 38 |
| DICY | 3 | -- |
| $BF_3$ MEA | -- | 1.5 |

TABLE 2

| Effect of Ex-Situ Particles on the Damage Resistance of Epoxy Composites As Indicated by Compression After Impact Results | | |
|---|---|---|
| Ex-Situ Particles | CAI @ 1500 in-lb/in (ksi) | |
| | 1A | 1B |
| None (control) | 37.3 | 28.5 |
| Petrarch SS0042 | 42.2 | --- |
| Hycar 1422 | 43.4 | --- |
| Proteus 5025 | 53.2 | 47.5 |

Particles that contain functional groups capable of reacting with the matrix resin, thus increasing the strength of the bond between the particle and the resin matrix, increase the damage resistance of the composite more effectively. For example, in the above table, the carboxyl functional particles significantly increased the damage resistance of a composite over composites containing a similar rubber particle lacking such functionality. This epoxy matrix resin is single phase and contains no oligomer or thermoplastic polymer component.

Example 2

The damage resistance of a composite made with the following thermoplastic-toughened, single phase matrix resin was increased by the inclusion of particles (Table 4):

TABLE 3

| Ingredient | Parts by Weight |
|---|---|
| MY 0510 | 50 |
| MY 721 | 50 |
| Victrex 5003P | 30 |
| 4,4' DDS | 5 |
| 3,3', DDS | 43 |

TABLE 4

| The Effect of Ex-Situ Particles on the Damage Resistance of Composites Made with a Thermoplastic-toughened Single-phase Matrix Resin | |
|---|---|
| Ex-situ Particles | CAI @ 1500 in-lb/in |
| None (control) | 34 |
| Petrarch SS0046 | 39.5 |
| Proteus 5025 | 42 |

The Victrex 5003P polyethersulfone was dissolved in the MY 0510 and MY 721. As in Example 1, the particulate was dispersed in the matrix resin before prepregging with IM7G carbon fiber. The diaminodiphenylsulfone curatives were dispersed in the resin after cooling to about 85° C.. The prepreg and composite test coupons were prepared as described.

Example 3

The damage resistance of a composite made with the following matrix resin was increased by the inclusion of particles. This resin is a single phase epoxy resin formulation that does not include thermoplastic polymer or aromatic oligomer for toughening.

TABLE 5

| Ingredient | Parts by Weight |
|---|---|
| Tactix 742 | 73 |
| DER 332 | 27 |
| Epi-Rez SU-8 | 10 |
| 4,4, DDS | 34 |

TABLE 6

| The Effect of Particulates on the Damage Resistance of a Single-Phase Epoxy Matrix Resin | |
|---|---|
| Ex-situ Particles | CAI @ 1500 in-lb/in |
| None (control) | 19 |
| Proteus 5025 | 24.5 |

In this case, the prepreg was prepared by hot-melt impregnation of the fiber and then the particles were sprinkled on the prepreg before lay-up. Test panels were cured at 250 ° F for 90 minutes, then 355 ° F for four hours and then machined and tested as described above.

A mixture of inorganic and rubber particles is also effective in increasing the damage tolerance of a composite. The following examples illustrate this point:

Example 4

Oligomer Toughened Resin

The following resin formulations were prepared by dissolving an amine-terminated polyethersulfone oligomer in the mixture of epoxies at about 120 ° C and then dispersing the infusible particles. The resin was cooled to below 100 ° C and the 4,4'-DDS curing agent dispersed. The DICY/Epon 828 mixture described in Example 1 was dispersed after the resin had been cooled to below 75 ° C. The resins were filmed onto release paper and prepreg was prepared by sandwiching a band of IM7G carbon fibers between two resin films (film process). A comparison is seen for first rubber, then glass and, finally, a combination of rubber and glass particles which provided the highest value for CAI.

TABLE 7

| | 7A | 7B | 7C |
|---|---|---|---|
| MY 0510, parts | 50 | 50 | 50 |
| PY 306, parts | 50 | 50 | 50 |
| Epon 828, parts | 2 | 2 | 2 |
| Amine-terminated PES oligomer, parts | 52 | 52 | 52 |
| Proteus 5025, parts | 8 | -- | 8 |
| Flex-o-fill 7B, parts | -- | 18 | 15 |
| 4,4'-DDS, parts | 42.6 | 42.6 | 42.6 |
| DICY, parts | 2 | 2 | 2 |
| CAI @1500 in-lb/in, ksi | 46.7 | 50.9 | 55.1 |

Example 5

Thermoplastic Toughened Resin

The following resin formulations were prepared by heating the epoxies to about 125 ° C, dispersing the Victrex 5003P PES and stirring for about 2 hours until the PES was dissolved. The infusible particles were dispersed and the mixture was cooled to below 100 ° C so the 4,4' DDS could be dispersed. Finally, the mixture was cooled to about 75 ° C and the DICY/Epon 828 mixture described in Example 1 was dispersed. The resin was filmed and IM7G carbon fiber prepreg was prepared in a film process.

TABLE 8

| | 1 | 2 |
|---|---|---|
| Epon 834, parts | 55 | 55 |
| Epon 828, parts | 3.5 | 3.5 |
| MY 0510, parts | 35 | 35 |
| PY 306, parts | 25 | 25 |
| Victrex 5003P PES, parts | 20 | 20 |
| Nipol 5078, parts | 11 | 11 |
| Flex-o-fill 7B, parts | -- | 16 |
| 4,4'DDS, parts | 38 | 38 |
| DICY, parts | 3.5 | 3.5 |
| CAI @ 1500 in-lb/in, ksi | 48 | 51.5 |

The combination of glass and rubber particles is again found to be a more effective toughener than rubber particles alone.

Example 6

A formulation substantially the same as in Example 1 of U.S. Patent 4,783,506 was employed with the substitution of a preformed rubber particle for the rubber solution employed in that patent. The formulation in the table set forth below was employed.

TABLE 9

| Ingredient | Parts by Weight |
|---|---|
| LY9703 | 23 |
| MY 0510 | 23 |
| Amino functional polyarylene polyether sulfone oligomer | 24 |
| 3,3'- DDS | 23 |
| Proteus 5025 Particles | 6 |
| TPPEI | 0.06 |
| Agerite Resin D | 0.18 |

The epoxies were weighed into a one gallon container which was equipped with a three-blade, stainless steel propeller. The rubber particles were slowly added to the mixture, which was being vigorously mixed at room temperature until the particles were homogeneously dispersed throughout the mixture.

The polyethersulfone oligomer was slowly added while stirring continued. This oligomer was made by reacting a molar excess of dichlorodiphenylsulfone with the potassium double salt of Bisphenol-A followed by reaction with the potassium salt of aminophenol. Product has molecular weight (a number average) between about 3500 and 5500 and about 90% of the end groups are amine groups with the remainder of the end groups comprising mainly hydroxyl groups. Procedures for making this polyether sulfone are described in detail in the examples of U.S. Patent No. 4,789,722 which are hereby incorporated herein by reference. The mixture was warmed to facilitate mixing. When the mixture's temperature reached 80 °C, 3,3'-diaminodiphenyl sulfone was added and stirring continued until the 3,3'-DDS was homogeneously dispersed. The mixture was then quenched with dry ice for storage. Carbon fiber prepreg was manufactured from this resin with IM7G carbon fiber and composite samples manufactured according to the procedure in U.S. Patent 4,783,506. The compression after impact at 1500 in lb/in. was 47.0 Ksi. The control sample containing no Proteus 5025 rubber particles had a compression after impact of 36.9 Ksi.

Example 7

Similarly improved compression after impact test results were produced when the rubber particle was Hycar 1422 rubber (an acrylonitrile butadiene copolymer rubber particle) which was surface functionalized by treatment with 2-mercaptoethylamine according to the following procedure.

Two mixtures were prepared. Mixture A contained 750.0 ml isopropyl alcohol and 150.0 grams of Hycar 1422 rubber (average size of 67 + /-26 microns with a range from 11-138 microns diameter). Mixture B contained 750.0 grams of deionized water and 37.5 grams of 36.7% HCl.

The mixtures were each stirred on a Corning PC-351 magnetic stirrer for ten minutes. Mixture A was poured into a clean, three liter, three neck round bottom flask. The three liter flask was immersed into a room temperature oil bath (about 22°C.). A thermometer, cold water condenser, and glass stirring rod were attached to the flask. The stirring rod, with a 125 mm Teflon stirrer, was fastened and connected to a variable speed high torque electric motor. The electrical motor was turned on and adjusted so that a deep vortex formed within the mixture. A nitrogen line and bubbler were connected to the septum of the condenser. While Mixture A was being stirred in the flask, Mixture B was carefully added to the flask with the use of a funnel. At this time, both the nitrogen and cold water lines were turned on. The three liter flask was purged with nitrogen for thirty minutes. After the thirty minutes, 15.0 grams of 2-mercaptoethylamine and 0.39 grams of Vazo 52, a polymerization initiator available from E. I. du Pont de Nemours & Company, Inc., 2,2'-azobis(2,4-dimethylvalero-nitrile), were added to the flask. The oil bath was turned on with the temperature control set for 60°C. An hour after the temperature reached 60°C, 0.39 grams more of Vazo 52 was added. The temperature was maintained at 60°C for three more hours, when the mixture was allowed to slowly cool to room temperature. The contents of the three liter flask were emptied into a 2000 ml beaker and neutralized with a 25.0% solution of sodium hydroxide. The treated Hycar 1422 rubber was filtered and washed, using a large porcelain Buchner filter funnel and deionized water. When the filtrate was free of chloride ions, the treated rubber was dried under vacuum in a room temperature oven overnight.

Hydrolysis of surface acrylonitrile to Carboxylate

A mixture of 162.5 grams of methanol and 130.0 grams of Hycar 1422 rubber was prepared. The mixture was stirred for fifteen minutes. 1300 ml of deionized $H_20$ was added to the same three liter, three neck apparatus used in Example 6, along with 143.0 grams of NaOH pellets. Once the NaOH was dissolved, with mixing, 39.0 ml of 30% hydrogen peroxide was slowly added to the NaOH solution. Then the methanol-rubber mixture was added to the flask. The mixture was kept at 60°C for 18 hours, whereupon it was allowed to cool to room temperature. The contents of the flask were filtered and washed, using a large Buchner filter funnel and deionized water until the pH of the filtrate equaled the pH of the deionized water. The treated rubber was dried overnight in a 50°C oven under vacuum.

TABLE 10

| Ex Situ Particles | CAI @ 1500 in-lb/in (ksi) |
|---|---|
| Hycar 1422 | 37.0 |
| Hydrolyzed 1422 | 47.3 |
| Mercaptoethylamine-treated | 42.4 |
| Control (no particles) | 36.9 |

Example 8

This example demonstrates the efficacy of rubber particles having a Tg below 15°C in toughening a thermoplastic containing epoxy-graphite composite. The rubber particles having carboxyl functionality are more effective tougheners than the particles having no functionality.

The following formulations of Table 11 were prepared by heating the epoxies to about 125°C, dispersing the Victrex 5003P PES and stirring for about 2 hours until the PES was dissolved. The infusible particles were dispersed and the mixture was cooled to below 100°C., so the 4,4'-DDS could be dispersed. Finally, the mixture was cooled to about 75°C. and the DICY/Epon 828 mixture described in Example 1 was dispersed. The resin was filmed and IM7G carbon fiber prepreg was prepared in a film process.

TABLE 11

| | 1 | 2 | 3 |
|---|---|---|---|
| Epon 834, parts | 55 | 55 | 55 |
| Epon 828, parts | 3.5 | 3.5 | 3.5 |
| MY 0510, parts | 35 | 35 | 35 |
| PY 306, parts | 25 | 25 | 25 |
| Victrex 5003P, parts | 20 | 20 | 20 |
| Nipol 5078, parts | 11 | - | - |
| 197-92, parts | - | 11 | - |
| 197-93, parts | - | - | 11 |
| Flex-o-fill 7B, parts | 16 | 16 | 16 |
| 4,4'-DDS, parts | 38 | 38 | 38 |
| DICY, parts | 3.5 | 3.5 | 3.5 |
| CAI @1500 in-lb/in, ksi | 51.5 | 46.4 | 51.1 |

Example 9

This example demonstrates the efficacy of rubber particles having a Tg below 15° C. in an oligomer-toughened epoxy matrix. The resin formulations are shown in Table 12.

The resin formulations were prepared by dissolving an amine-terminated polyethersulfone oligomer in the mixture of epoxies at about 120° C. and then dispersing the infusible particles. The resin was cooled to below 100° C, and the 4,4' DDS curing agent was dispersed. IM7G carbon fiber prepreg was prepared using a hot bead process. The test panels were laid up and cured for 4 hours at 350° F.

TABLE 12

| | 1 | 2 |
|---|---|---|
| MY 0510, parts | 50 | 50 |
| Epiclon 830, parts | 50 | 50 |
| Amine-terminated PES oligomer, parts | 60 | 60 |
| 121-1 | 8 | - |
| 197-44 | - | 8 |
| 4,4'-DDS | 42 | 42 |
| CAI @1500 in-lb/in, ksi | 48.8 | 47.8 |

Example 10

This example demonstrates the efficacy of rubber particles having a Tg below 15° C. in toughening a single phase epoxy matrix resin containing no oligomer or thermoplastic polymer. The formulations are shown in Table 13. The Epon 834, MY 9512, and 10 parts of 4,4'-DDS were combined and held at 95° C. for about 15 minutes. The CY 179 and 28 parts of the 4,4'-DDS were combined, heated at about 140° C. for 2 hours, cooled and then added to the other ingredients. The ex-situ particles were dispersed and the DICY/Epon 828 mixture described in Example 1 was added after the resin had cooled below 75° C.

TABLE 13

| | 1 | 2 | 3 |
|---|---|---|---|
| Epon 834, parts | 80 | 80 | 80 |
| Epon 828, parts | 3 | 3 | 3 |
| MY 9512 | 20 | 20 | 20 |
| MY 0510 | 20 | 20 | 20 |
| CY 179 | 21 | 21 | 21 |
| Nipol 5078 | 12 | - | - |
| 197-92 | - | 12 | - |
| 197-93 | - | - | 12 |
| Flex-o-fill 7B | 8 | 8 | 8 |
| 4,4'-DDS | 41 | 41 | 41 |
| DICY | 3 | 3 | 3 |
| CAI @1500 in-lb/in, ksi | 49.7 | 46.3 | 51.2 |

The rubber particle samples having a carboxy functionality are more effective than the rubber particle sample that contains no functionality.

## Claims

1. In a resin composition comprising from about 70 to about 99 wt% of an epoxy resin composition and from about 1 to about 30 wt% of ex situ particles, wherein said particles have a median size between 5 and 75 microns the improvement wherein said particles are selected from the group consisting of elastomeric particles having a Tg below about 15 °C and mixtures of said elastomeric particles and inorganic particles.

2. The resin composition in accordance with claim 1 wherein said elastomeric particles comprise butadiene-acrylonitrile copolymer particles.

3. The resin composition in accordance with claim 2 wherein said elastomeric particles contain functionalities selected from the group consisting of carboxyl and amine functionality.

4. The resin composition in accordance with claim 1 wherein said inorganic particles are a mineral filler.

5. The resin composition of claim 1 wherein said particles are carboxylated butadiene-acrylonitrile copolymer particles reinforced with a mineral filler.

6. The resin composition of claim 1 wherein said inorganic particles comprise glass particles.

7. The resin composition in accordance with claim 1 wherein said epoxy resin composition comprise: about 100 parts by weight of an epoxy resin component having at least two epoxide groups per molecule; between about 5 and 100 parts by weight of a curing agent or mixture of curing agents; between about 10 and 70 parts by weight of a polymeric toughener selected from the group consisting of reactive aromatic oligomers and thermoplastics and mixtures thereof; and between about 0 and 10 parts by weight of a cure accelerator.

8. The resin composition of claim 7 wherein said curing agent comprises a mixture of 4,4'-diaminodiphenylsulfone and dicyandiamide.

9. The resin composition of claim 7 wherein said reactive oligomer comprises a terminally functional polyarylene polyether sulfone.

10. The resin composition of claim 7 wherein said thermoplastic is a polyethersulfone.

**11.** A prepreg useful in making damage tolerant structural composites, said prepreg comprising one or more high strength filament tows or bundles that is impregnated with the resin composition of any one of the preceding claims.

**12.** In a multi-layer damage tolerant, structural composite, said composite comprising: (a) a crosslinked epoxy matrix; (b) high strength filaments within said matrix in the form of tows or rovings that comprise a multitude of said filaments, said tows or rovings being in layers extending throughout said composite; and (c) ex situ particles, the improvement wherein said particles have a median size between 5 and 75 microns and are selected from the group consisting of elastomeric particles having a Tg below about 15 °C and mixtures of said elastomeric particles and inorganic particles.

**13.** The composite of claim 12 wherein said elastomeric particles comprise butadiene-acrylonitrile copolymer particles.

**14.** The composite of claim 13 wherein said elastomeric particles contain functionalities selected from the group consisting of carboxyl and amine functionality.

**15.** The composite of claim 12 wherein said inorganic particles are a mineral filler.

**16.** The composite of claim 12 wherein said inorganic particles comprise glass particles.